# EUROPÄISCHE PATENTANMELDUNG

(11) **EP 2 669 552 A1**
(43) Veröffentlichungstag der Anmeldung: **04.12.2013**
(21) Anmeldenummer: 13168120.7
(22) Anmeldetag: 16.05.2013
(51) Int. Cl.: F16J 15/00, F16J 15/34, F16J 15/40, F16C 33/74

(54) **Dichtungsanordnung für eine rotierende Welle**

(30) Priorität: 31.05.2012 EP 12170163
(71) Anmelder: SULZER PUMPEN AG, 8401 Winterthur (CH)
(72) Erfinder: Meuter, Paul, 8472 Seuzach (CH)
(74) Vertreter: Sulzer Management AG

(57) **Zusammenfassung**

Die Erfindung betrifft eine Dichtungsanordnung (16) für eine rotierende Welle (10), welche insbesondere als eine Antriebswelle einer Pumpe ausgeführt ist. Die Dichtungsanordnung (16) verfügt über einen fest stehenden Dichtungshalter (16), in dem eine erste und eine zweite Gleitringdichtung (20, 25) gelagert sind. Die Gleitringdichtungen (20, 25) weisen jeweils ein mitdrehendes Dichtungsdrehteil (22, 27) und ein fest stehendes Dichtungsteil (19, 24) auf. Zwischen den Gleitringdichtungen (20, 25) und dem Dichtungshalter (16) bildet sich ein Dichtungsraum (16, 31, 32) aus, dem über eine Zuführleitung (36) Dichtungsfluid zugeführt werden kann.

Um eine gute Rotordynamik der Welle bei einfachem Aufbau der Dichtungsanordnung zu ermöglichen, wird erfindungsgemäss vorgeschlagen, dass zwischen der ersten und der zweiten Gleitringdichtung (20, 25) ein Lager (34) angeordnet ist, mittels welchem die Welle (10) gegenüber dem Dichtungshalter (16) gelagert werden kann.

## Beschreibung

Die Erfindung betrifft eine Dichtungsanordnung für eine rotierende Welle gemäß dem Oberbegriff des Anspruchs 1.

Die DE 199 28 141 A1 beschreibt eine Dichtungsanordnung für eine rotierende Welle. Die Dichtungsanordnung ist insbesondere für eine Antriebswelle einer Pumpe einsetzbar, wobei die Dichtungsanordnung in diesem Fall fest mit einem Gehäuse der Pumpe verbunden ist und die Antriebswelle aus dem Gehäuse heraus ragt. Die Dichtungsanordnung verfügt über einen fest stehenden Dichtungshalter, welcher eine Ausnehmung aufweist, durch welche die Welle hindurch ragen kann. In dem Dichtungshalter sind eine erste und eine zweite Gleitringdichtung gelagert, wobei die Gleitringdichtungen jeweils ein mitdrehendes Dichtungsdrehteil und ein fest stehendes Dichtungsteil aufweisen. Zwischen den Gleitringdichtungen und dem Dichtungshalter bildet sich ein Dichtungsraum aus, dem über eine Zuführleitung Dichtungsfluid zugeführt werden kann. Die Gleitringdichtungen sind so angeordnet, dass die Welle durch beide Gleitringdichtungen und die Ausnehmung des Dichtungshalters hindurch ragen kann. Derartige Gleitringdichtungskombinationen werden meist als montagefertige Einheiten vertrieben, die vor dem Einbau auf Dichtheit prüfbar sind und Montagefehler verhindern.

Derartige Dichtungsanordnungen werden meist bei rotierenden Wellen eingesetzt, die aus einem Gehäuse, beispielsweise einem Pumpengehäuse heraus ragen. Die Dichtungsanordnung dient dazu, das Gehäuse in dem Bereich, in dem die Welle durch das Gehäuse herausragt, abzudichten. Abhängig von den Einsatzbedingungen geht es dabei hauptsächlich darum, einen Eintritt von Fluid oder Partikeln aus der Umgebung in das Gehäuse oder einen Austritt des im Gehäuse enthaltenden Fluids zu verhindern.

Rotierende Wellen müssen aber nicht nur abgedichtet, sondern auch gelagert werden. Es sind Lösungen bekannt, bei denen die Lagerung innerhalb des Gehäuses angeordnet ist. Dies führt dazu, dass ein aus dem Gehäuse heraus ragender Teil der Welle, der so genannte Überhang vergleichsweise lang ist. Dies kann zu einer ungünstigen Rotordynamik, also zu Schwingungsproblemen an der Welle führen. Es sind ausserdem Lösungen bekannt, bei denen die Lagerung der Welle vom Gehäuse gesehen hinter der Dichtungsanordnung angeordnet ist. Dies macht ein separates Lagergehäuse zur Aufnahme und Abdichtung des Lagers notwendig. Da die eingesetzten Lager meist auch geschmiert werden müssen, ist in diesem Fall auch noch eine separate Schmiermittelversorgung des Lagers notwendig. Bei der Anordnung des Lagers innerhalb eines Pumpengehäuses kann die Schmierung auch durch das zu fördernde Fluid erfolgen. Dies kann allerdings auch zu Problemen führen, wenn das zu fördernde Fluid Partikel enthält, die das Lager schädigen können, das zu fördernde Fluid also abrasive Eigenschaften aufweist.

Demgegenüber ist es die Aufgabe der Erfindung, eine Dichtungsanordnung für eine rotierende Welle vorzuschlagen, welche eine gute Rotordynamik der Welle bei einfachem Aufbau der Dichtungsanordnung ermöglicht. Erfindungsgemäss wird die Aufgabe durch eine Dichtungsanordnung mit den Merkmalen des Anspruchs 1 gelöst.

Erfindungsgemäss ist zwischen der ersten Gleitringdichtung und der zweiten Gleitringdichtung ein Lager angeordnet, mittels welchem die Welle gegenüber dem Dichtungshalter gelagert werden kann. Damit ist der Überhang der rotierenden Welle vergleichsweise kurz, was eine gute Rotordynamik der Welle ermöglicht. Gleichzeitig ist das Lager in dem vom Dichtungshalter und den Gleitringdichtungen begrenzten und abgeschirmten Dichtungsraum angeordnet, so dass kein separates Gehäuse für das Lager notwendig ist.

In Ausgestaltung der Erfindung sind ein mitdrehendes Dichtungsdrehteil und ein fest stehendes Dichtungsteil der Gleitringdichtungen neben dem Lager angeordnet. Die Gleitringdichtungen sind damit in einer so genannten Tandemanordnung angeordnet. Das Dichtungsfluid, das dem Dichtungsraum zugeführt wird, wird in diesem Fall als so genanntes "Quench-Fluid" oder "Quench-Medium" bezeichnet. Der Druck des Dichtungsfluids ist in diesem Fall gleich oder kleiner als der abzusperrende Druck im Gehäuse. Wenn eine Leckage an der näher zum abzusperrenden Druck angeordneten Gleitringdichtung auftritt, so wird das austretende Fluid vom Dichtungsfluid aufgenommen und kann neutralisiert werden. Ausserdem kann durch Analyse bzw. Überwachung des Dichtungsfluids die Leckage erkannt werden. Damit wird ein sicherer Betrieb der Dichtungsanordnung ermöglicht.

In Ausgestaltung der Erfindung sind beide mitdrehenden Dichtungsdrehteile der Gleitringdichtungen neben dem Lager angeordnet. Die Gleitringdichtungen sind damit in einer so genannten "Back to back" Anordnung angeordnet. Das Dichtungsfluid, das dem Dichtungsraum zugeführt wird, wird in diesem Fall als so genanntes "Sperr-Fluid" bezeichnet. Der Druck des Dichtungsfluids ist in diesem Fall grösser als der abzusperrende Druck im Gehäuse. Wenn eine Leckage an der näher zum abzusperrenden Druck angeordneten Gleitringdichtung auftritt, so strömt auf Grund des höheren Drucks im Dichtungsraum das Dichtungsfluid in das Gehäuse und es wird in jedem Fall verhindert, dass Fluid aus dem Gehäuse austreten kann. Durch Überwachung des Drucks des Dichtungsfluids kann eine Leckage an einer der beiden Gleitringdichtungen erkannt werden. Anzeichen dafür ist ein Druckabfall des Dichtungsfluids. Damit wird ein besonders sicherer Betrieb der Dichtungsanordnung ermöglicht.

In Ausgestaltung der Erfindung ist das Lager als ein Gleitlager ausgeführt. Das Lager kann beispielsweise aus einer Bronzelegierung, einer Aluminiumlegierungen oder einem Stahlverbundwerkstoffhergestellt sein. Die Laufflächen können zusätzlich beschichtet sein, wobei beispielsweise eine Weißmetallschicht möglich ist. Es ist auch möglich, dass das Gleitlager aus zwei Teilen, nämlich dem fest stehenden und dem drehenden Teil aufgebaut sein, wobei beide Teile jeweils aus mehreren Schichten bestehen, die miteinander verbunden, beispielsweise verlötet sind. Die beiden inneren Schichten bilden die jeweilige Gleitschicht, die bei Rotation der Welle aufeinander gleiten. Die Verwendung von Gleitlagern ermöglicht einen einfachen und kostengünstigen Aufbau der Dichtungsanordnung. Gleitlager benötigen ausserdem wenig Bauraum und sind wartungsarm.

In Ausgestaltung der Erfindung wird das Dichtungsfluid zur Schmierung des Lagers genutzt. Das Lager ist also so innerhalb des Dichtungsraums angeordnet, dass es mit dem Dichtungsfluid in Kontakt kommt und insbesondere das Dichtungsfluid an die zu schmierenden Stellen des Lagers kommen kann. Das Lager kann dazu spezielle Bohrungen aufweisen, über welche das Dichtungsfluid an die relevanten Stellen des Lagers geführt werden kann. Das Dichtungsfluid kann quasi frei ausgewählt werden. Es kann also ein Dichtungsfluid, beispielsweise ein leichtes Erdölderivat ausgewählt werden, mit welchem eine effektive Schmierung des Lagers möglich ist. Ausserdem enthält das Dichtungsfluid üblicherweise keine Verunreinigungen, so dass das Lager nicht robust gegenüber Verunreinigungen ausgeführt sein muss. Es ist deshalb nicht notwendig, dass das Lager aus besonders hochwertigen Materialen aufgebaut ist, was den Einsatz eines kostengünstigen Lagers ermöglicht.

In Ausgestaltung der Erfindung weist die Dichtungsanordnung neben einer Zuführleitung für das Dichtungsfluid auch eine Abführleitung auf, über welche Dichtungsfluid aus dem Dichtungsraum abgeführt werden kann. Damit kann ein Kreislauf für das Dichtungsfluid aufgebaut werden. In dem Kreislauf ist insbesondere eine Dichtungsfluid-Pumpe angeordnet, welche das Dichtungsfluid dem Dichtungsraum zu- und abführt. Der Kreislauf kann einen Filter zum Filtern des Dichtungsfluids und/oder einen Kühler zum Kühlen des Dichtungsfluids enthalten. An den Kreislauf kann auch ein Dichtungsfluid-Reservoir angeschlossen sein, aus welchem die Dichtungsfluid-Pumpe bei Bedarf Dichtungsfluid fördern und in den Kreislauf einbringen kann. Damit kann eine effektive Kühlung des Lagers und auch der Gleitringdichtungen gewährleistet werden, womit ein sicherer Betrieb der Dichtungsanordnung ermöglicht wird.

In Ausgestaltung der Erfindung ist der Dichtungshalter mehrteilig ausgeführt. Der Dichtungshalter kann aus zwei, drei oder mehr Teilen bestehen, die miteinander verbunden werden. Zwischen den einzelnen Teilen können Dichtungen, insbesondere in Form von O-Ringen angeordnet sein. Die mehrteilige Ausführung des Dichtungshalters ermöglicht eine einfache und damit kostengünstige Montage der Dichtungsanordnung.

In Ausgestaltung der Erfindung sind im Dichtungsraum Leitelemente zur Beeinflussung einer Strömung des Dichtungsfluids angeordnet. Damit kann das Dichtungsfluid gezielt an Stellen geleitet werden, an denen es besonders dringend benötigt wird. Damit wird eine besonders effektive Nutzung des Dichtungsfluids ermöglicht.

Das Leitelement weist insbesondere ein erstes Leitelementteil und ein zweites Leitelementteil auf, wobei das erste Leitelementteil fest steht und das zweite Leitelementteil mit der Welle rotiert. Die beiden Leitelementteile sind dann so angeordnet, dass das Dichtungsfluid zwischen den Leitelementteilen hindurchströmt. Das Leitelement kann insbesondere so ausgeführt sein, dass bei Rotation des zweiten Leitelementteils eine Pumpwirkung entsteht, so dass das Dichtungsfluid durch das Leitelement durchgepumpt wird. Damit kann eine effektive Verteilung des Dichtungsfluids im Dichtungsraum ermöglicht werden und es ist eine besonders effektive Beeinflussung der Strömung des Dichtungsfluids möglich.

Die erfindungsgemässe Dichtungsanordnung ist insbesondere vorteilhaft bei einer Pumpe einsetzbar. Sie ist insbesondere an einer Antriebswelle der Pumpe angeordnet, über welche die Pumpe beispielsweise von einem Elektromotor angetrieben wird.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine Dichtungsanordnung für eine rotierende Welle mit integriertem Lager,
- Fig. 2: eine Dichtungsanordnung für eine rotierende Welle mit integriertem Lager in einer zweiten Ausführungsform und
- Fig. 3: eine Dichtungsanordnung für eine rotierende Welle mit integriertem Lager gemäss Fig. 2 in einer detaillierteren Darstellung.

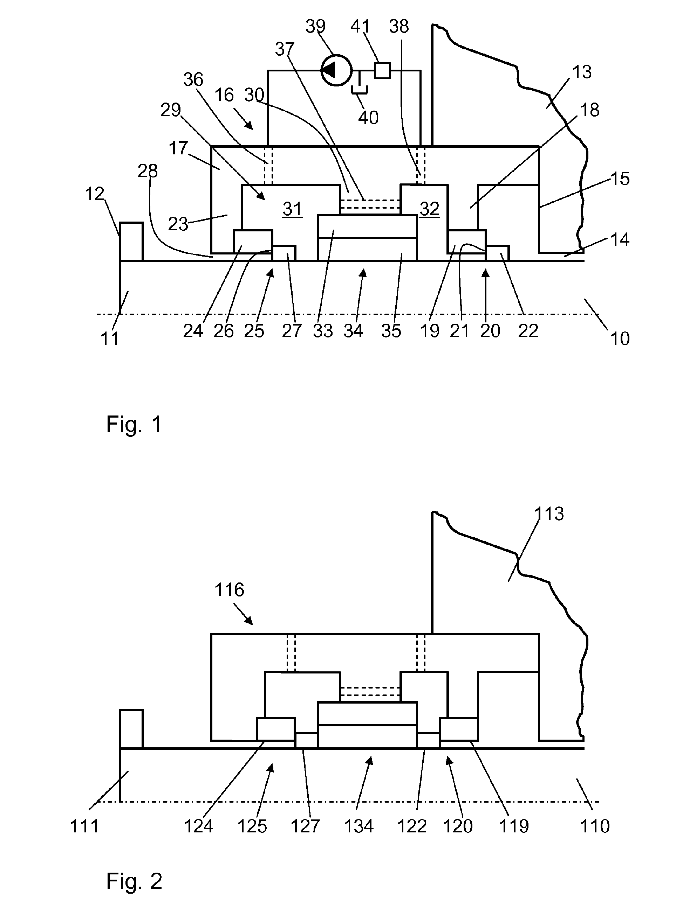

Gemäss Fig. 1 weist eine Welle 10, welche als eine Antriebswelle einer Pumpe ausgeführt ist, an einem Wellenende 11 eine Anschlusskupplung 12 für einen nicht dargestellten Elektromotor auf, mittels welchem die Welle 10 und damit die Pumpe angetrieben werden kann. Die Pumpe wird durch einen Ausschnitt eines Pumpengehäuses 13 repräsentiert, aus dem die Welle 10 durch einen kreisrunden Wellendurchgang 14 hindurch heraus ragt. Um den Wellendurchgang 14 herum weist das Pumpengehäuse 13 eine kreisrunde Ausnehmung 15 auf. Die Pumpe dient zur Förderung eines Arbeitsfluids, beispielsweise Wasser oder Öl, das im Pumpengehäuse 13 unter einem Arbeitsdruck vorliegt. Um zu verhindern, dass das Arbeitsfluid über den Wellendurchgang 14 aus dem Pumpengehäuse 13 austritt, ist um die Welle 10 herum eine Dichtungsanordnung 16 angeordnet. Ein Teil der Dichtungsanordnung 16 wird von der Ausnehmung 15 des Pumpengehäuses 13 aufgenommen.

Die Dichtungsanordnung 16 weist einen Dichtungshalter 17 auf, der um die Welle 10 herum angeordnet und in die Ausnehmung 15 des Pumpengehäuses 13 hinein ragt. Er weist eine Ausnehmung 28 auf, durch die die Welle 10 hindurch ragt. Der Dichtungshalter 17 ist über nicht dargestellte Schrauben mit dem Pumpengehäuse 13 verschraubt und steht damit fest. Er weist eine hauptsächlich zylinderförmige Grundform auf.

Der Dichtungshalter 17 verfügt über eine in Richtung Welle 10 orientierte, erste scheibenförmige Halterung 18, welche noch innerhalb der Ausnehmung 15 des Pumpengehäuses 13 angeordnet ist. An der ersten Halterung 18 ist ein erstes feststehendes Dichtungsteil 19 einer ersten Gleitringdichtung 20 befestigt und damit gelagert. Das erste feststehende Dichtungsteil 19 weist eine erste Dichtfläche 21 zu einem ersten mitdrehenden Dichtungsdrehteil 22 der ersten Gleitringdichtung 20 auf. Das erste mitdrehende Dichtungsdrehteil 22 ist drehfest mit der Welle 10 verbunden.

Der Dichtungshalter 17 verfügt ausserdem über eine in Richtung Welle 10 orientierte, zweite scheibenförmige Halterung 23, welche ausserhalb der Ausnehmung 15 des Pumpengehäuses 13 angeordnet ist und einen Abschluss des Dichtungshalters 17 in Richtung Wellenende 11 bildet. An der zweiten Halterung 23 ist ein zweites feststehendes Dichtungsteil 24 einer zweiten Gleitringdichtung 25 befestigt und damit gelagert. Das zweite feststehende Dichtungsteil 24 weist eine zweite Dichtfläche 26 zu einem zweiten mitdrehenden Dichtungsdrehteil 27 der zweiten Gleitringdichtung 25 auf. Das zweite mitdrehende Dichtungsdrehteil 27 ist drehfest mit der Welle 10 verbunden.

Die beiden Gleitringdichtungen 20, 25 dichten damit das Pumpengehäuse 13 gegen einen Austritt des im Pumpengehäuse 13 enthaltenen Arbeitsfluids über den Wellendurchgang 14 ab. Sie sind so angeordnet, dass die Welle 10 durch beide Gleitringdichtungen 20, 25 und die Ausnehmung 28 des Halteteils 17 hindurch ragen kann.

Zwischen der ersten Gleitringdichtung 20 und der zweiten Gleitringdichtung 25 bildet sich ein Dichtungsraum 29 aus, der durch eine dritte scheibenförmige Halterung 30 in einen äusseren Dichtungsraum 31 und einen inneren Dichtungsraum 32 geteilt wird. An der dritten Halterung 30 ist ein Aussenring 33 eines Gleitlagers 34 befestigt. Ein zugehöriger Innenring 35 des Gleitlagers 34 ist drehfest mit der Welle 10 verbunden, so dass die Welle 10 mittels des Gleitlagers 34 gegenüber dem Dichtungshalter 17 gelagert ist.

Die erste Gleitringdichtung 20 ist so angeordnet, dass das erste feststehende Dichtungsteil 19 neben dem Gleitlager 34 angeordnet ist. Damit ist das erste Dichtungsdrehteil 22 zum Pumpengehäuse 13 hin angeordnet. Die zweite Gleitringdichtung 25 ist so angeordnet, dass das zweite Dichtungsdrehteil 27 neben dem Gleitlager 34 angeordnet ist. Damit ist das zweite feststehende Dichtungsteil 24 zum Wellenende 11 hin angeordnet. Die Gleitringdichtungen 20, 25 sind damit in einer so genannten Tandemanordnung angeordnet.

Der Dichtungshalter 17 weist eine Zuführleitung 36 auf, die von aussen zum äusseren Dichtungsraum 31 führt. Über die Zuführleitung 36 wird Dichtungsfluid dem äusseren Dichtungsraum 31 und damit dem Dichtungsraum 29 zugeführt. Das Dichtungsfluid ist als ein leichtes Erdölderivat ausgeführt und wird als so genanntes "Quench-Fluid" bezeichnet. Der Druck des Dichtungsfluids ist gleich oder kleiner als der abzusperrende Druck des Arbeitsfluids im Pumpengehäuse 13. Das Dichtungsfluid gelangt über eine Durchgangsleitung 37 in der dritten Halterung 30 vom äusseren Dichtungsraum 31 zum inneren Dichtungsraum 32. Über eine Abführleitung 38 im Dichtungshalter 17 wird das Dichtungsfluid aus dem inneren Dichtungsraum 32 und damit aus dem Dichtungsraum 29 nach aussen abgeführt.

Ausserhalb der Dichtungsanordnung 16 ist eine Dichtungsfluid-Pumpe 39 vorgesehen, die Dichtungsfluid zur Zuführleitung 36 fördert. Die Dichtungsfluid-Pumpe 29 saugt Dichtungsfluid über die Abführleitung 38 aus dem inneren Dichtungsraum 32 an. Die Dichtungsfluid-Pumpe 39 kann zusätzlich auch Dichtungsfluid aus einem Dichtungsfluid-Reservoir 40 ansaugen. Vor dem Eintritt in die Dichtungsfluid-Pumpe 39 wird das Dichtungsfluid in einer Kühl- und Reinigungseinrichtung 41 gekühlt und gereinigt.

In dem Fall, dass an der ersten Dichtfläche 21 der ersten Gleitringdichtung 20 Leckage auftreten sollte, vermischt sich das aus dem Pumpengehäuse 13 austretende Arbeitsfluid mit dem Dichtungsfluid und wird gemeinsam mit diesem über die Abführleitung 38 abgeführt.

Daneben dient das Dichtungsfluid auch dazu, die Gleitflächen 21, 26 der Gleitringdichtungen 20, 25 zu schmieren und zu kühlen. Eine weitere wichtige Funktion des Dichtungsfluids ist die Schmierung und Kühlung des Gleitlagers 34, welches vom Dichtungsfluid umströmt wird. Im Gleitlager 34 und/oder im dritten Halter 30 können zusätzliche Bohrungen vorgesehen sein, über welche Dichtungsfluid gezielt an besonders beanspruchte Stellen des Gleitlagers 34 geleitet werden kann.

Zwei Gleitringdichtungen können ausser in der in Fig. 1 gezeigten Tandemanordnung auch in einer so genannten Back to Back Anordnung angeordnet werden. Eine derartige Anordnung ist in einer zweiten Ausführungsform einer Dichtungsanordnung für eine rotierende Welle umgesetzt, die in Fig. 2 dargestellt ist. Die Dichtungsanordnung gemäss Fig. 2 ist sehr ähnlich aufgebaut wie die Dichtungsanordnung 16 gemäss Fig. 1, weshalb nur auf die Unterschiede der beiden Dichtungsanordnungen eingegangen wird.

Die Dichtungsanordnung 116 gemäss Fig. 2 weist ebenfalls eine erste Gleitringdichtung 120 und eine zweite Gleitringdichtung 125 auf. Allerdings ist im Gegensatz zur Dichtungsanordnung 16 aus Fig. 1 die erste Gleitringdichtung 120 so angeordnet, dass ein erstes Dichtungsdrehteil 122 neben einem Gleitlager 134 angeordnet ist. Damit ist ein erstes feststehendes Dichtungsteil 119 zu einem Pumpengehäuse 113 hin angeordnet. Die zweite Gleitringdichtung 125 ist ebenso wie die erste Gleitringdichtung 25 in Fig. 1 so angeordnet, dass ein zweites Dichtungsdrehteil 127 neben dem Gleitlager 134 angeordnet ist. Damit ist ein zweites feststehendes Dichtungsteil 124 zu einem Wellenende 111 einer Welle 110 hin angeordnet. Die Gleitringdichtungen 120, 125 sind damit in der oben genannten Back to Back Anordnung angeordnet.

Ein zugeführtes Dichtungsfluid ist ebenfalls als ein leichtes Erdölderivat ausgeführt und wird in diesem Fall als so genanntes "Sperr-Fluid" bezeichnet. Der Druck des Dichtungsfluids ist grösser als der abzusperrende Druck des Arbeitsfluids im Pumpengehäuse 113.

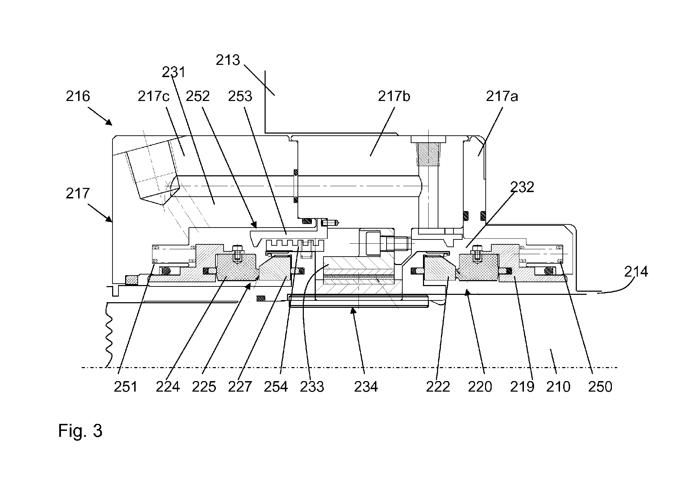

In Fig. 3 ist eine Dichtungsanordnung 216 für eine rotierende Welle 210 mit integriertem Lager 234 in einer detaillierteren Darstellung gezeigt. Der Aufbau der Dichtungsanordnung 216 entspricht prinzipiell dem Aufbau der Dichtungsanordnung 116 aus Fig. 2. Deshalb wird bei der Beschreibung der Dichtungsanordnung 216 hauptsächlich auf kleinere Unterschiede oder zusätzliche Details gegenüber der Dichtungsanordnung 116 aus Fig. 2 eingegangen.

Ein Dichtungshalter 217 der Dichtungsanordnung 216 ist dreiteilig aufgebaut. Eine erstes Dichtungshaltungsteil 217a dient zur Halterung einer ersten Gleitringdichtung 220, deren erstes feststehendes Dichtungsteil 219 von einer ersten Feder 250 gegen ein erstes Dichtungsdrehteil 222 gedrückt wird. Das erste Dichtungshaltungsteil 217a ist dabei neben einem Wellendurchgang 214 eines Pumpengehäuses 213 angeordnet.

An das erste Dichtungshaltungsteil 217a schliesst sich ein zweites Dichtungshaltungsteil 217b an, an welchem ein Aussenring 233 des Gleitlagers 234 befestigt ist. Der Aussenring 233 ist dabei dreischichtig aufgebaut.

An das zweite Dichtungshaltungsteil 217b schliesst sich ein drittes Dichtungshaltungsteil 217c an, welches zur Halterung einer zweiten Gleitringdichtung 225, deren zweites feststehendes Dichtungsteil 224 von einer zweiten Feder 251 gegen ein zweites Dichtungsdrehteil 227 gedrückt wird.

Die Dichtungshaltungsteile 217a, 217b und 217c sind gegeneinander mit nicht weiter bezeichneten Dichtungen in Form von O-Ringen abgedichtet.

In einem äusseren Dichtungsraum 231 ist ein Leitelement 252 zur Beeinflussung einer Strömung des Dichtungsfluids angeordnet. Das Leitelement 252 ist zweiteilig aufgebaut. Ein erstes, fest stehendes Leitelementteil 253 ist fest mit dem zweitem Dichtungshaltungsteil 217b verbunden. Ein zweites rotierendes Leitelementteil 254 ist fest mit zweiten Dichtungsdrehteil 227 der zweiten Gleitringdichtung 225 verbunden. Die Aussenkontur des zweiten rotierenden Leitelementteils 254 ist dabei so ausgeführt, dass durch dessen Drehung Dichtungsfluid vom äusseren Dichtungsraum 231 in einen mittleren Dichtungsraum 255, welcher zwischen dem äusseren Dichtungsraum 231 und einem inneren Dichtungsraum 232 angeordnet ist, gefördert wird.

Der mittlere Dichtungsraum 255 und der innere Dichtungsraum 232 sind durch eine oder mehrere Durchgangsleitungen verbunden. Die Durchgangsleitungen befinden sich nicht in der in Fig. 3 dargestellten Ebene, weshalb sie in Fig. 3 nicht zu sehen ist.

## Patentansprüche

1. Dichtungsanordnung für eine rotierende Welle,
mit
- einem fest stehenden Dichtungshalter (17, 117, 217), welcher eine Ausnehmung (28) aufweist, durch welche die Welle (10, 110, 210) hindurch ragen kann,
- einer ersten in dem Dichtungshalter (17, 117, 217) gelagerten Gleitringdichtung (20, 120, 220) mit einem ersten mitdrehenden Dichtungsdrehteil (22, 122, 222) und einem ersten fest stehenden Dichtungsteil (19, 119, 219),
- einer zweiten in dem Dichtungshalter (17, 117, 217) gelagerten Gleitringdichtung (25, 125, 225) mit einem zweiten mitdrehenden Dichtungsdrehteil (27, 127, 227) und einem zweiten fest stehenden Dichtungsteil (24, 124, 224),
- einem sich zwischen den Gleitringdichtungen (20, 120, 220; 25, 125, 225) und dem Dichtungshalter (17, 117, 217) ausbildenden Dichtungsraum (29, 31, 32; 231, 232, 255) und
- einer Zuführleitung (36), über welche ein Dichtungsfluid dem Dichtungsraum (29, 31, 32; 231, 232, 255) zugeführt werden kann,
wobei die Gleitringdichtungen (20, 120, 220; 25, 125, 225) so angeordnet sind, dass die Welle (10, 110, 210) durch beide Gleitringdichtungen (20, 120, 220; 25, 125, 225) und die Ausnehmung (28) des Halteteils (17, 117, 217) hindurch ragen kann,
**dadurch gekennzeichnet, dass**
zwischen der ersten Gleitringdichtung (20, 120, 220) und der zweiten Gleitringdichtung (25, 125, 225) ein Lager (34, 134, 234) angeordnet ist, mittels welchem die Welle (10, 110, 210) gegenüber dem Dichtungshalter(17, 117, 217) gelagert werden kann.

2. Dichtungsanordnung nach Anspruch 1,
**dadurch gekennzeichnet, dass**
ein mitdrehendes Dichtungsdrehteil (27) und ein fest stehendes Dichtungsteil (19) der Gleitringdichtungen (20, 25) neben dem Lager (34) angeordnet sind.

3. Dichtungsanordnung nach Anspruch 1,
**dadurch gekennzeichnet, dass**
beide mitdrehenden Dichtungsdrehteile (122, 222, 127, 227) der Gleitringdichtungen (120, 220; 125, 225) neben dem Lager (134, 234) angeordnet sind.

4. Dichtungsanordnung nach Anspruch 1, 2 oder 3,
**dadurch gekennzeichnet, dass**
das Lager (34, 134, 234) als ein Gleitlager ausgeführt ist.

5. Dichtungsanordnung nach einem der Ansprüche 1 bis 4,
**dadurch gekennzeichnet, dass**
das Dichtungsfluid zur Schmierung des Lagers (34, 134, 234) genutzt wird.

6. Dichtungsanordnung nach einem der Ansprüche 1 bis 5,
**gekennzeichnet durch**
eine Abführleitung (38), über welche Dichtungsfluid aus dem Dichtungsraum (29, 31, 32; 231, 232, 255) abgeführt werden kann.

7. Dichtungsanordnung nach einem der Ansprüche 1 bis 6,
**dadurch gekennzeichnet, dass**
der Dichtungshalter (217) mehrteilig ausgeführt ist.

8. Dichtungsanordnung nach einem der Ansprüche 1 bis 7,
**dadurch gekennzeichnet, dass**
im Dichtungsraum (231) Leitelemente (252, 253, 254) zur Beeinflussung einer Strömung des Dichtungsfluids angeordnet sind.

9. Dichtungsanordnung nach Anspruch 8,
**dadurch gekennzeichnet, dass**
das Leitelement (252) ein erstes Leitelementteil (253) und ein zweites Leitelementteil (254) aufweist, wobei das erste Leitelementteil (253) fest steht und das zweite Leitelementteil (254) mit rotiert und die beiden Leitelementteile (253, 254) so angeordnet sind, dass das Dichtungsfluid zwischen den Leitelementteilen (253, 254) hindurchströmt .

10. Pumpe mit einer Dichtungsanordnung nach einem der Ansprüche 1 bis 9.

11. Pumpe nach Anspruch 10,
**dadurch gekennzeichnet, dass**
die Dichtungsanordnung (16, 116, 216) an einer Antriebswelle (10, 110, 210) angeordnet ist.
